# EUROPEAN PATENT SPECIFICATION

(11) **EP 1 542 898 B1**
(45) Date of publication and mention of the grant of the patent: **07.07.2010**
(21) Application number: 03770998.7
(22) Date of filing: 08.07.2003
(51) Int. Cl.: B62D 55/32, F16H 55/46, B62D 55/12

(54) **SPLIT WHEEL AND METHOD FOR INSTALLING ENDLESS TRACK**
GETEILTES RAD UND VERFAHREN ZUR INSTALLATION EINER RAUPENKETTE
ROUE DIVISEE ET PROCEDE D'INSTALLATION D'UNE CHENILLE

(30) Priority: 25.07.2002 CA 2395757; 25.07.2002 US 202391
(43) Date of publication of application: 22.06.2005
(73) Proprietor: Soucy International, Inc., Drummondville, Québec J2B 6W3 (CA)
(72) Inventor: DELAND, André, Drummondville, Québec J2B 5R1 (CA); DELISLE, Marc, Drummondville, Québec J2C 7A9 (CA)
(74) Representative: Hoffmann, Jörg Peter
(86) International application number: PCT/CA2003/001027
(87) International publication number: WO 2004/011323

(56) References cited:
- US-A- 3 083 585
- US-A1- 2001 001 431
- US-B1- 6 250 726
- US-B1- 6 293 631

## Description

### Field of the invention

This invention relates to endless tracks used to propel tracked vehicles [i.e., vehicles which use endless tracks rather than tires to contact the terrain over which they are driven, e.g., tractors, tanks, bulldozers, etc.] and, more particularly, to one split wheel which allows for easier and more efficient method of installing the endless track on a tracked vehicle.

### Background of the invention

[NOTE: As used herein, the term "rubber" relates to any elastic and primarily non-metallic materials such as rubber, elastomers, or combinations thereof used in the manufacture of endless tracks].

Numerous types of vehicles are frequently used in terrain in which it is difficult for pneumatic tires to operate. Both defense vehicles, such as tanks and amphibious vehicles, and civilian vehicles, such as tractors and recreational vehicles, are sometime utilized on terrains which are very soft, for example sand surfaces. Pneumatic tires are not capable of efficient operation on such soft surfaces, as they tend to burrow into the surface, rather than riding across the surface.

In the past the most popular type of track for heavy duty vehicles have been metallic tracks. However, these metallic tracks still present significant inconveniences in relation to wheeled vehicle. Some of these problems can be summarized as follows:
- Noise. The metallic track produces an excessively high level of noise. This fact can cause a significant strategic disadvantage when used in association with defense vehicles since the enemy can detect their presence many miles away.
- **Damage.** With respect to civilian vehicles equipped with such tracks or defense vehicles used in peace keeping missions, the metallic tracks can cause significant damage to the ground surface whether it be paved or not.
- **Weight.** Metallic tracks are very heavy. For example the, typical weight of a metallic track used on an M113 vehicle is 1200 pounds while metallic tracks used on a fighting vehicle can be above 2500 pounds. Such a weight is both an inconvenience with respect to the mobility of the vehicles and with respect to their consumption of fuel.
- **Short lifespan.** Metallic tracks have a short lifespan. Even metallic tracks provided with rubber pads wear out extremely rapidly such that the pads need to be replaced typically every 500 to 1000 miles on a defense tank.
- **Maintenance.** Metallic tracks also require a lot of maintenance. The replacement of the rubber pads, the metallic links or pivots, etc. require a continuous maintenance of the tracks.
- **Costs.** Finally, the cost of manufacturing, maintenance and refurbishing are extremely high.

Recently, endless rubber tracks have become popular because of an increase in construction. With the combination of rubber technology and a tremendous amount of trial and error, various types of rubber tracks are now available in the industry. They are used on defense vehicle, excavators, dump carriers, boring machines, combines, tractors, and the like.

While rubber endless tracks are often desirable since they reduce damage to the terrain, reduce noise and allow access to various types of soil, they do have some drawbacks concerning their installation and removal. Usually, once installed the track is carried and maintained in tension by a plurality of rotating elements (wheels, sprockets, etc...) that are connected to the vehicle. The tracks being maintained in circumferential contact with these rotating elements are being driven thereby (or, in the case of trailer-like non-driven vehicles, being supported for rotation thereon).

Metallic tracks which are often formed by a number of individual pieces fastened together can be separated into a single strip thus allowing installation onto the plurality of rotating elements. This method has been in place for many years.

Rubber tracks on the other hand are usually formed of a single continuous piece, and it is typically difficult and may require special equipment to mount them around the plurality ofrotating elements, or remove them when maintenance or access is needed on the vehicle. This is especially true with tracks for heavy duty vehicles where the tracks can weigh a substantial amount.

As rubber tracks have grown more popular it has become apparent that the best way of installing a new track involves the removal of one or more of the wheels or other rotating elements from the vehicle. While the removal of the wheel rotating elements allows the track to be slid around the drive assembly with more ease, reinstalling the wheel rotating elements still may pose problems.

The present invention sets out to solve the problem of installing or removing a rubber endless track by a method using a tension wheel which is split into sections when viewed from the side). The parts may be installed separately and will form a complete tension wheel when fully installed.

The idea of splitting a wheel into multiple pieces is not new, though it has not previously been adapted for use with endless track installation.

Previous split wheel assemblies can be found in United States patents 4,631,974 (Weigland et al.), 5,080,852 (Hertel et al.), and 5,868,036 (Salzman).

US 4,631,974 Weigland et al. describes a split sprocket wheel for applications which are either submerged or in a corrosive environment. The wheel of the Weigland patent is made up of two portions of a circular wheel. During installation the two pieces of the wheel are put around a drive shaft and fastened together by multiple means, such as a circular band clamp and a plurality of wedge dog assemblies. US 5,080,852 Hertel et al. describes a method for making a bearing sleeve for a split sprocket wheel assembly such as the one described in the Weigland patent.

US 5,868,036 Salzman describes a split transfer wheel which is used to impart movement to other materials. The wheel comprises two wheel halves which are held together by multiple bolts. The construction of the wheel allowing for a strip of a tire material to be held in place around the wheel, and said strip of tire material being replaced if worn out.

While the above split wheels are useful in their own areas, the construction of the wheels unfortunately do not allow them to be useful in the field of endless track installation. The reason for this is that the wheels of the Salzman and the Weigland patents need to be fully assembled to function. The same holds also for the wheels disclosed in US-B1-6 293 631, US-B1-6 250 726 and US-A-3 083 585. For the installation of endless tracks it is useful to have a split wheel which allows for one portion of the wheel to be installed and function without the other portion of the wheel being installed.

The document US-B1-6 293 631 represents the closest prior art and discloses implicitly a method of installing an endless elastomeric track on a tracked vehicle equipped with a plurality of road wheels, one of which is a split track tensioning wheel, comprising:
a first section, comprising a portion of the circumference of the said split track tensioning wheel and a second section comprising another portion of said circumference; said method comprising the steps of:
   a) insuring said split track tensioning wheel is removed from the said vehicle;
   b) placing said endless track over said plurality of wheels;
   c) installing said first section on the vehicle such that said circumference portion faces away from said endless track;
   d) installing said second section of said split track tensioning wheel on said vehicle.

US 2001/0001431 A1 describes a suspension and drive mechanism for a multi-surface vehicle. This document discloses a split wheel 704 which is part of an assembly (see Fig. 7 of US 2001/0001431 A1) which necessitates that the shaft 130 of the assembly must be removed from the bracket 230 (see Fig. 8 of US 2001/0001431 A1) in order to remove the wheel 704. Moreover, it would probably also be necessary to remove at least one of wheels 700 or 702 to remove wheel 704. The fact that the wheel 704 of US 2001/0001431 A1 is split is because of the presence of the flanges 720, 721, 722 and 724 to prevent the wheel 704 to be slidingly mounted on the shaft 710, whereby a removing of the split wheel from the track assembly would clearly not help the mounting and dismounting of the endless track.

### Summary of the invention

The objective of this invention is to provide a workable solution to the rubber endless track installation problems, since such a track is mostly made from one single continuous rubber part, thus requiring special tools or equipment at installation.

The rubber endless track had originally been invented as a compromise to metal tracks, proposing a wider range of commercial and residential applications for a tracked vehicle, with a lower cost and at a lower weight.

With the increase in popularity for such a rubber track came the necessity to provide the means for an easier installation process, since the track installation, removal and the maintenance procedures can sometimes be required in a variety of environments, or in remote and/or inconvenient locations.

The invention provides a step by step method of installation of an endless rubber track on a vehicle using a split wheel which replaces the tension wheel or the drive sprocket on the typical tracked vehicle configuration.

There is therefore provided a split track tensioning wheel and a method of installing an endless elastomeric track on a tracked vehicle according to claims 1 to 5.

There is also provided a split wheel for use with an endless track, comprising:
a first section, comprising a portion of the circumference of the said wheel and
a second section comprising another portion of said circumference;
   said first section, said second section being configured such that said first section may be fastened to a supporting shaft without said second section being fastened to said supporting shaft.

In another embodiment, a split wheel for use with an endless track, comprising:
a first section, comprising a portion of the circumference of the said wheel and a second section comprising another portion of said circumference:
   a third portion comprising still another portion of said circumference;
   said first section, said second section and said third section being configured such that said first section and said third section may be fastened to a supporting shaft without said second section being fastened to said supporting shaft.

There is provided a method of installing an endless track on a tracked vehicle equipped with a plurality of wheels, one of which is a split wheel comprising:
a first section, comprising a portion of the circumference of the said wheel and a second section comprising another portion of said circumference ;
said method comprising the steps of :
   a) removing said split wheel from the said vehicle;
   b) placing said endless track over said plurality of wheels;
   c) installing said first section on the vehicle such that said circumference portion faces away from said endless track;
   d) rotate said first section by moving the vehicle forward such that said circumference portion faces said endless track, to tension said endless track around said plurality of road wheels and said first section.
   e) installing said second section on said vehicle.

While the invention method and use of a split wheel is meant to facilitate the installation process of a rubber track on a tracked vehicle, one particular purpose is to lower the cost and reduce the time required to complete the installation or replacement of a rubber track. A simpler method with the use of many standard tools will also benefit to the customer by increasing possibilities of fixing field problems.

Other aspects and many of the attendant advantages will be more readily appreciated as the same becomes better understood by reference to the following detailed description and considered in connection with the accompanying drawings in which like reference symbols designated like elements throughout the figures.

The features of the present invention which are believed to be novel are set forth with particularity in the appended claims.

### Brief description of the figures

Accordingly it is intended that the foregoing disclosure and showing made in the drawings shall be considered only as an illustration of the principle of the present invention.
FIG. 1 is a partial side view of a tracked vehicle making use of a split tension wheel in accordance with the invention;
FIG. 2 is a rear view of the vehicle shown in Figure1;
FIG. 3 is a partial rear view showing the endless rubber track alongside the vehicle shown in Figure 1;
FIG. 4 is a partial side view of the vehicle on which the rubber track has been partially installed;
FIG. 5 is a partial side view of the vehicle on which the vehicle has been lowered on the rubber track;
FIG. 6 is a perspective view showing the first half of a drive sprocket being installed on its supporting shaft;
FIG. 7 is a perspective view showing the rubber track being installed on the first half of the drive sprocket;
FIG. 8 is a perspective view showing the second half of a drive sprocket being installed with the first half of the drive sprocket and the rubber endless track;
FIG. 9 is a partial side view of a tracked vehicle on which the rubber track gap between the drive sprocket and the first road wheel has been minimized;
FIG. 10 is a perspective view showing the tension wheel supporting shaft and the rubber track before the installation of the first section of the tension wheel;
FIG. 11 is a perspective view of the first section of the tension wheel being installed;
FIG. 12 is a partial side view showing the first section of the tension wheel being rotated;
FIG. 13 is a perspective view of the second section of the tension wheel being installed;
FIG. 14 is a partial side view of the tension wheel area on which pressure is applied on the tension wheel cylinder;

### Detailed description of a preferred embodiment

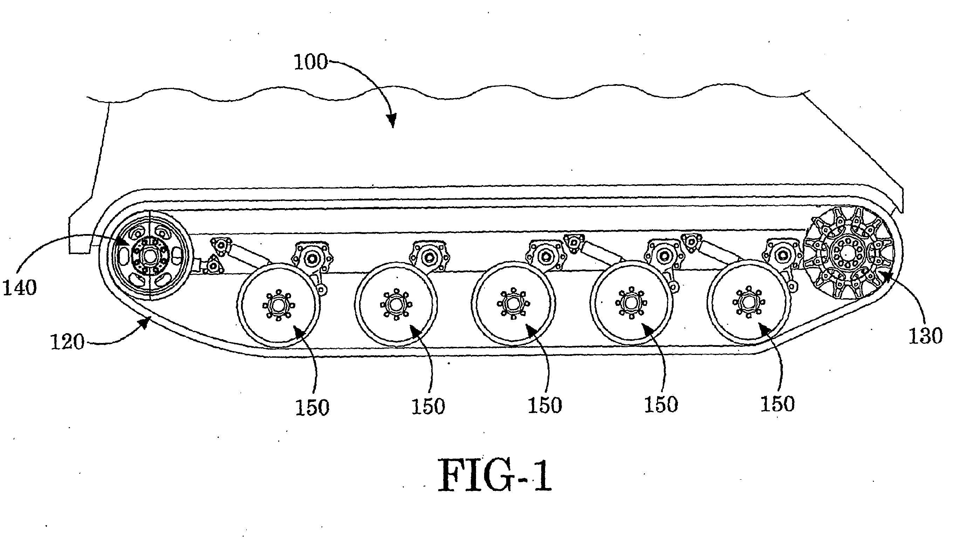

FIG 1. shows a general side view of a split tension wheel system in accordance with this invention and installed in this embodiment on a defense vehicle 100. The vehicle comprises an endless reinforced rubber track 120, a sprocket drive 130, a split tension wheel 140 and a plurality of road wheels 150 which support the vehicle and guide the track 120. This system is coupled to appropriate drive means (not shown) through an appropriate suspension system (not shown). A similar system is disposed on the other side of the vehicle 100.

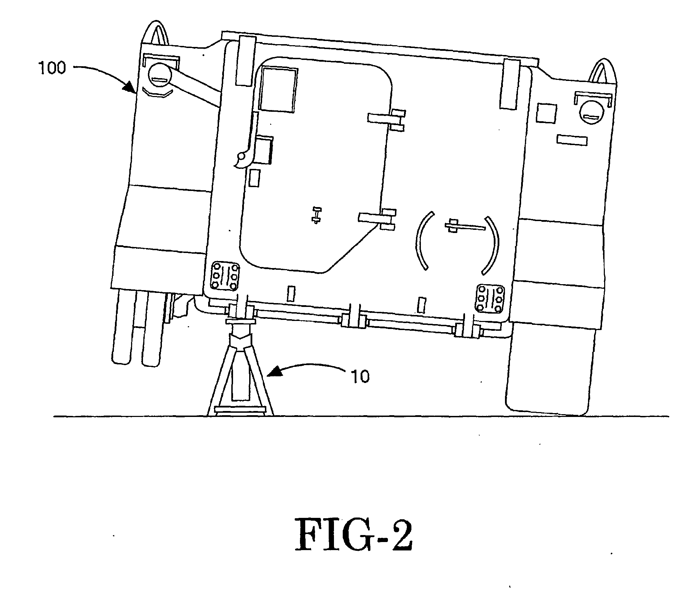

Although the method explained herein is described in relation to the installation of an endless track on a vehicle, it is also applicable for the removal of the endless track from the vehicle. As shown in FIG. 2, the vehicle 100 needs to be lifted one side at a time with a typical jacking equipment 10 in order to install the endless rubber track 120 (see FIG. 1).

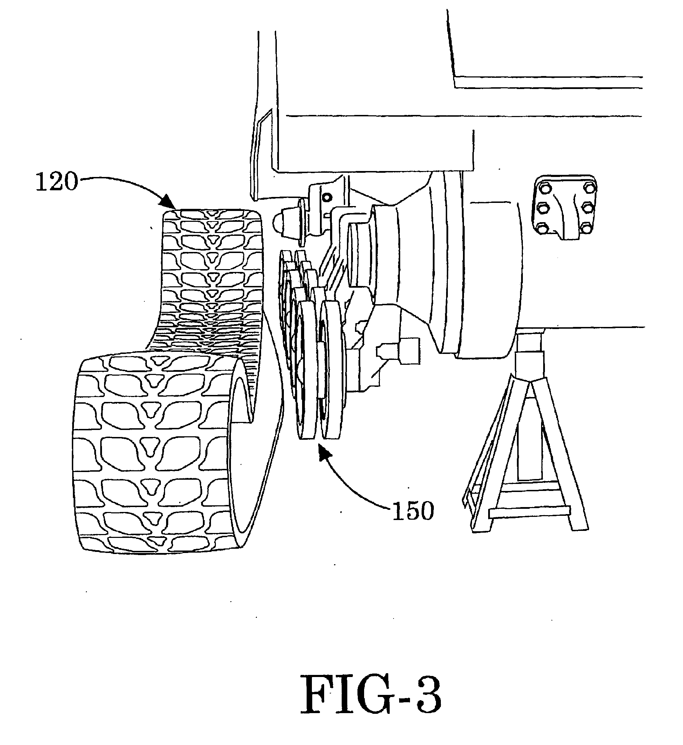

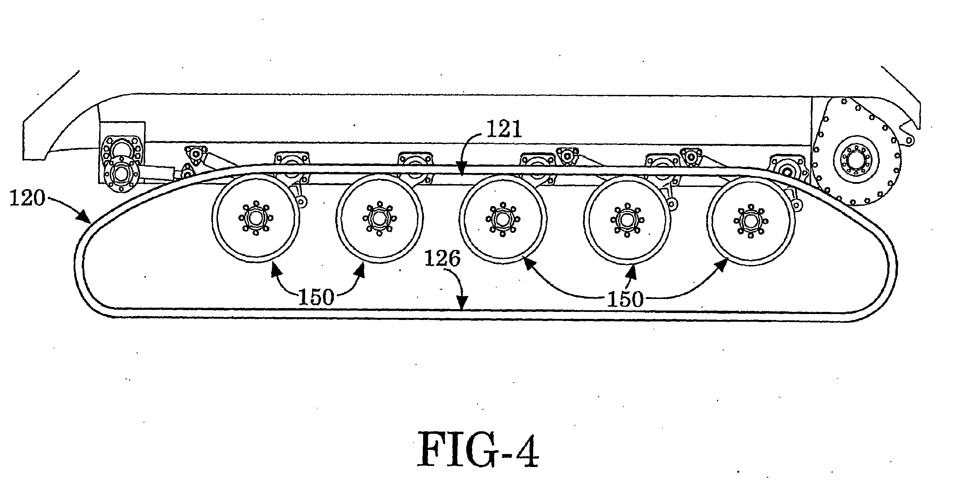

As shown in FIG. 3, the rubber track 120 needs to be laid along the plurality of road wheels 150 in the required direction of operation. The upper portion 121 of the rubber track 120 is lifted and disposed over the plurality of road wheels 150, as shown in FIG. 4, followed by the sliding of the rubber track 120 lower portion 126 under and aligned with the plurality of road wheels 150.

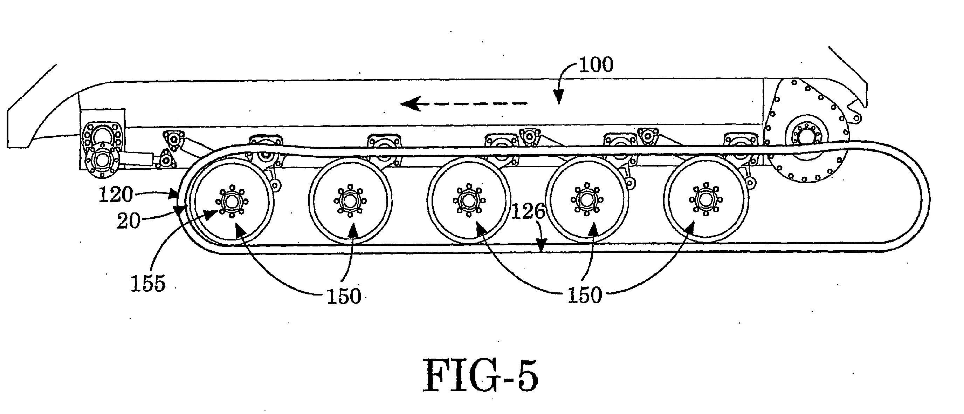

FIG. 5 shows the resulting configuration after the jacking equipment 10 (see FIG. 2) has been removed and the vehicle 100 and its plurality of road wheels 150 have been lowered on the lower portion 126 of the rubber track 120. By hand or by moving the vehicle back, the gap 20 between the endless track 120 and the last road wheel 155 is kept as small as possible.

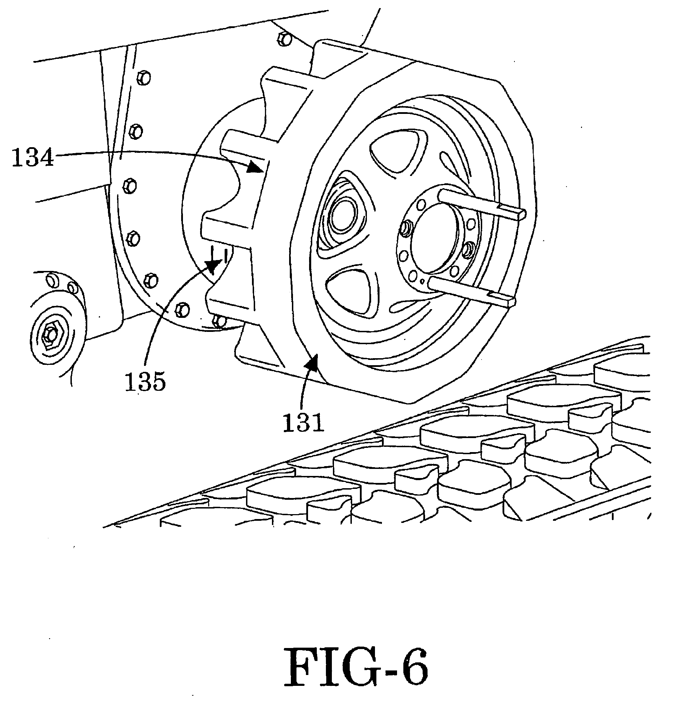

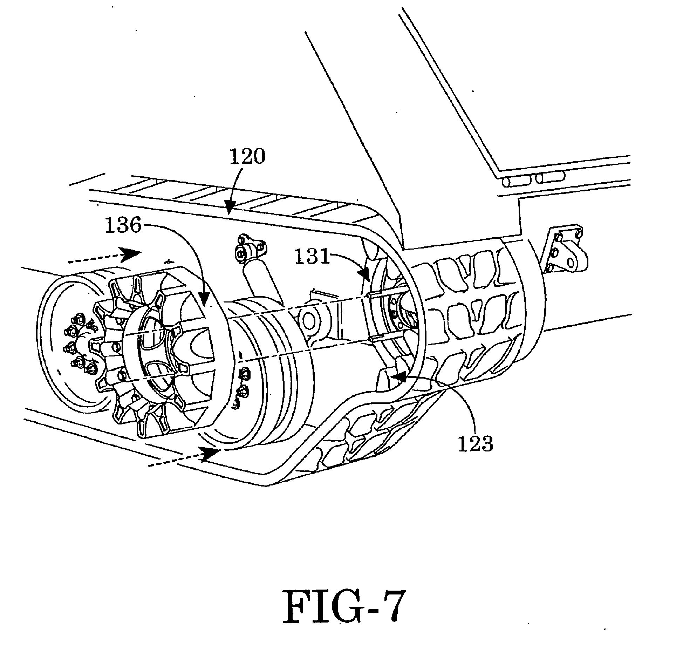

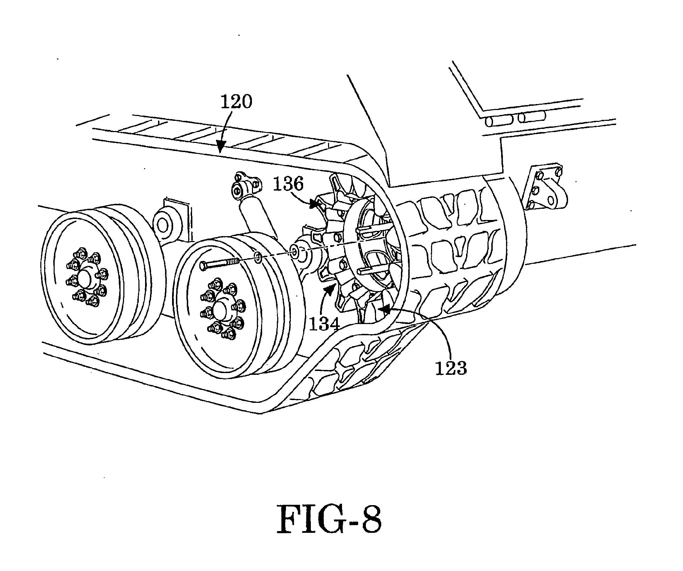

As illustrated in FIG 6., the inner half 131 of drive sprocket 130 (longitudinal split of the drive sprocket 130) is installed on its shaft hub 135, then becomes available as support for the upper part 121 of the endless tracks 120 (see FIG. 4). FIG. 7 shows how to position the rubber track 120 on top of the inner half 131 of drive sprocket 130 by engaging the rubber track inner lugs (not shown) into the formed gorge 134 of the drive sprocket 130 (see FIG. 6, only one shown). The outer half 136 of drive sprocket 130 is assembled with the inner half 131 of drive sprocket 130 and in conjunction with the rubber track 120, by still having corresponding rubber track lugs 123 (only one shown) inserted in the formed gorge 134 (only one shown) of the outer half 136 of drive sprocket 130, as shown in FIG 8.

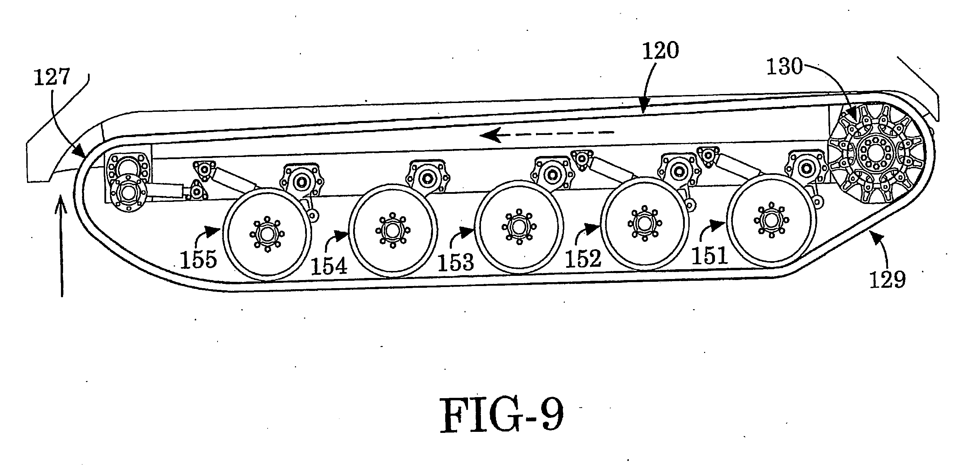

As shown in FIG. 9, tension is obtained in segment 129 of the rubber track 120, which is located between first road wheel 151 and drive sprocket 130, with engine power rotating drive sprocket 130 backward, thus providing the maximum rubber track play near its end 127.

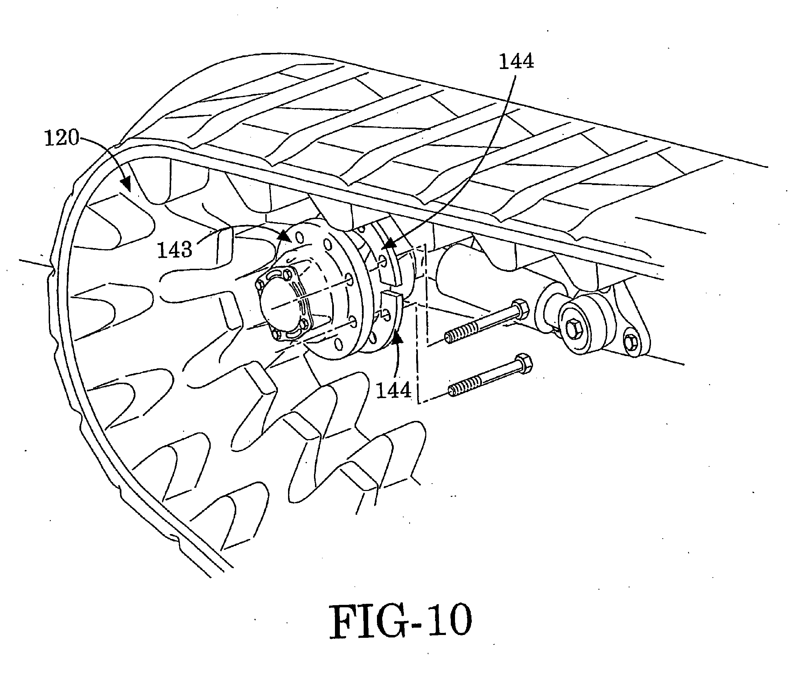

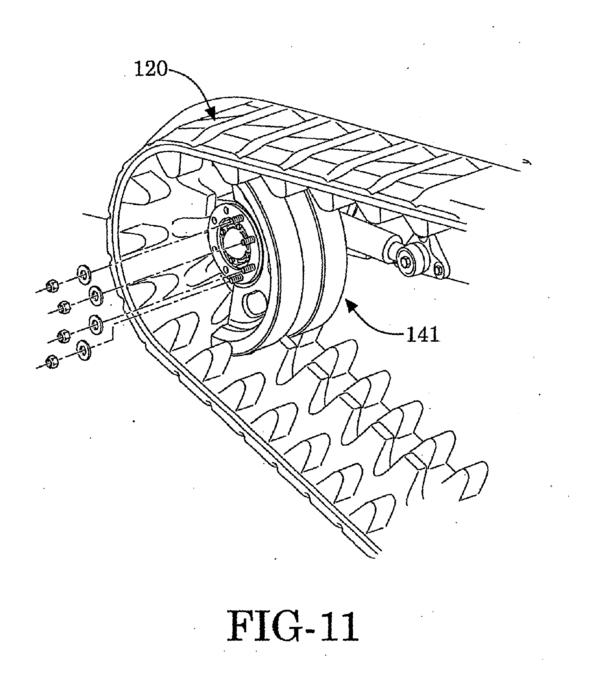

FIG. 10 shows that separated rings 144 are positioned on the innermost side of the tension wheel shaft hub 143 in order to provide a clamping device. Once the first half 141 of tension wheel 140 is positioned towards the front of the vehicle, as shown in FIG. 11, separated rings 144, tension wheel shaft hub 143 and the first half 141 of tension wheel 140 are hand-tightened together.

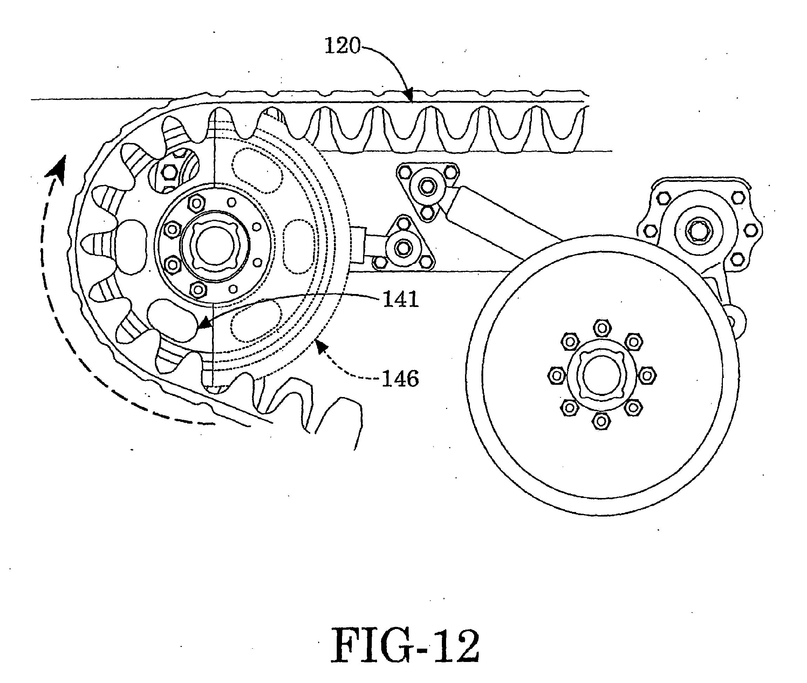

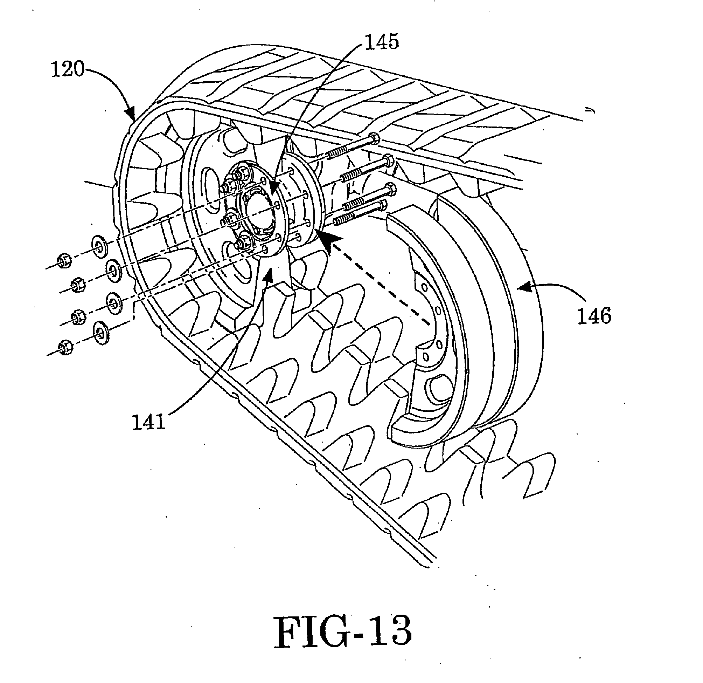

As illustrated in FIG. 12, the rotation of the first half 141 of tension wheel 140, induced by moving the vehicle forward (with engine power), offers space provision for the installation of the second half 146 of tension wheel 140 and simultaneously provides greater tension to the rubber track 120 along the process. FIG. 13 shows the final tension wheel assembly on the vehicle 100 with the addition of the second half 146 of tension wheel 140 and a full ring 145 positioned on the outermost face of the tension wheel assembly, thus ensuring a complete tightened clamping system.

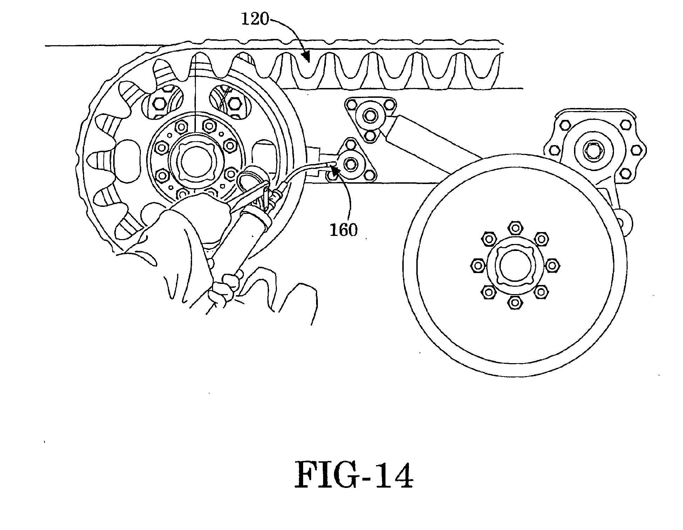

Finally, the rubber track 120 is preferably tensioned to a greater degree, by applying pressure to the tensioning system 160, as shown in FIG. 14.

The same step by step method is also applicable for the installation of the endless track with a split tension wheel on the other side of the vehicle 100.

## Claims

1. A method of installing an endless elastomeric track (120) on a tracked vehicle (100) equipped with a plurality of road wheels (150), and a split track tensioning wheel (140), comprising:
a first section (141), comprising a portion of the circumference of the said split track tensioning wheel (140) and a second section (146) comprising another portion of said circumference;
said method comprising the steps of:
a) insuring said split track tensioning wheel (140) is removed from the said vehicle (100);
b) placing said endless track (120) over said plurality of road wheels (150);
c) installing said first section (141) on the vehicle (100) such that said circumference portion faces away from said endless track (120);
d) rotating said first section (141) induced by moving the vehicle (100) forward, which offers space provision for an installation of the second section (146) such that said circumference portion faces said endless track (120), to tension said endless track (120) around said plurality of road wheels (150) and said first section (141);
e) installing said second section (146) of said split track tensioning wheel (140) on said vehicle (100).

2. A method as claimed in claim 1 wherein said vehicle (100) further comprises a drive sprocket (130) and wherein step b) further comprises the placing of said endless track (120) over said drive sprocket (130) and wherein step d) further comprises the tensioning of said endless track (120) around said drive sprocket (130).

3. A method as claimed in claim 1 wherein step b) further comprises the placing of said endless track (120) over said tension wheel and wherein step d) further comprises the tensioning of said endless track (120) around said tension wheel.

4. A method as claimed in claim 1, further comprising the step of fastening said second section (146) to said first section (141).

5. A method as claimed in claim 1, wherein said first section (141) and said second section (146) are identical.

## Patentansprüche

1. Verfahren zum Montieren einer elastomeren Endloskette (120) an einem Kettenfahrzeug (100), welches mit einer Mehrzahl von Laufrädern (150) und einem unterteilten Kettenspannrad (140) ausgebildet ist,
mit einem ersten Abschnitt (141) mit einem Bereich des Umfangs des unterteilten Kettenspannrads (140) und einem zweiten Abschnitt (146) mit einem anderen Bereich des Umfangs,
wobei das Verfahren die Schritte aufweist:
a) Sicherstellen, dass das unterteilte Kettenspannrad (140) vom Fahrzeug (100) entfernt ist.
b) Anordnen der Endloskette (120) über der Mehrzahl von Laufrädern (150),
c) Montieren des ersten Abschnitts (141) am Fahrzeug (100) derart, dass der Umfangsbereich von der Endloskette (120) abgewandt ist,
d) Rotieren des ersten Abschnitts (141) durch Vorwärtsbewegen des Fahrzeugs (100), wodurch Platz für eine Montage des zweiten Abschnitts (146) derart bereitgestellt wird, dass der Umfangsbereich der Endloskette (120) zugewandt ist, um die Endloskette (120) um die Mehrzahl von Laufrädern (150) und den ersten Abschnitt (141) zu spannen,
e) Montieren des zweiten Abschnitts (146) des unterteilten Kettenspannrads (140) am Fahrzeug (100).

2. Verfahren nach Anspruch 1,
wobei das Fahrzeug (100) des Weiteren ein Antriebskettenrad (130) aufweist,
wobei der Schritt b) des Weiteren ein Platzieren der Endloskette (120) über dem Antriebskettenrad (130) aufweist und
wobei der Schritt d) des Weiteren ein Spannen der Endloskette (120) um das Antriebskettenrad (130) herum aufweist.

3. Verfahren nach Anspruch 1,
wobei der Schritt b) des Weiteren das Platzieren der Endloskette (120) über dem Spannrad aufweist und
wobei der Schritt d) des Weiteren das Spannen der Endloskette (120) um das Spannrad herum aufweist.

4. Verfahren nach Anspruch 1,
welches des Weiteren den Schritt des Befestigens des zweiten Abschnitts (146) am ersten Abschnitt (141) aufweist.

5. Verfahren nach Anspruch 1,
wobei der erste Abschnitt (141) und der zweite Abschnitt (146) identisch sind.

## Revendications

1. Procédé d'installation d'une chenille en élastomère (120) sur un véhicule à chenilles (100), équipé de plusieurs roues (150) et d'une roue divisée de tension de chenille (140), comportant :
une première section (141), comportant une partie de la circonférence de ladite roue divisée de tension de chenille (140) et une seconde section (146) comportant une autre partie de ladite circonférence ; ledit procédé comportant les étapes consistant à :
a) s'assurer que ladite roue divisée de tension de chenille (140) est démontée dudit véhicule (100) ;
b) placer ladite chenille (120) sur lesdites roues (150) ;
c) installer ladite première section (141) sur le véhicule (100) de sorte que ladite partie de circonférence s'écarte de ladite chenille (120) ;
d) faire tourner ladite première section (141) sous l'effet du déplacement du véhicule (100) vers l'avant, ce qui permet de ménager un espace pour une installation de la seconde section (146) de telle sorte que ladite partie de circonférence se trouve face à ladite chenille (120), pour tendre ladite chenille (120) autour desdites roues (150) et de ladite première section (141) ;
e) installer ladite seconde section (146) de ladite roue divisée de tension de chenille (140) sur ledit véhicule (100).

2. Procédé selon la revendication 1, dans lequel ledit véhicule (100) comporte en outre un pignon d'entraînement (130) et dans lequel l'étape b) comporte en outre l'étape consistant à placer ladite chenille (120) sur ledit pignon d'entraînement (130) et dans lequel l'étape b) comporte en outre l'étape consistant à placer ladite chenille (120) au-dessus dudit pignon d'entraînement (130) et dans lequel l'étape d) comporte en outre l'étape consistant à tendre ladite chenille (120) autour dudit pignon d'entraînement (130).

3. Procédé selon la revendication 1, dans lequel l'étape b) comporte en outre l'étape consistant à placer ladite chenille (120) sur ladite roue de tension et dans lequel l'étape d) comporte en outre l'étape consistant à tendre ladite chenille (120) autour de ladite roue.

4. Procédé selon la revendication 1, comportant en outre l'étape consistant à fixer ladite seconde section (146) à ladite première section (141).

5. Procédé selon la revendication 1, dans lequel ladite première section (141) et ladite seconde section (146) sont identiques.
